# EUROPÄISCHE PATENTANMELDUNG

(11) **EP 1 094 262 A2**
(43) Veröffentlichungstag der Anmeldung: **25.04.2001**
(21) Anmeldenummer: 00120928.7
(22) Anmeldetag: 26.09.2000
(51) Int. Cl.: F16K 31/60

(54) **Ventil mit Handbetätigung**

(30) Priorität: 13.10.1999 DE 19949361
(71) Anmelder: Nass Magnet GmbH, 30179 Hannover (DE)
(72) Erfinder: Rieck, Frank, 31303 Burgdorf (DE)
(74) Vertreter: Tetzner, Michael, Dipl.-Ing.

(57) **Zusammenfassung**

Die Erfindung betrifft ein Ventil mit einem in einem Ventilgehäuse (1) angeordneten Ventilglied (2) und einer Handbetätigungseinrichtung (3), die ein in einer Ausnehmung (1.1) des Ventilgehäuses beweglich angeordnetes Betätigungselement (3.1) aufweist, das zur manuellen Betätigung des Ventilglieds mit diesem in Wirkverbindung steht. Ferner sind Mittel zur Sicherung des Betätigungselements in der Ausnehmung des Ventilgehäuses vorgesehen, die durch einen starren Vorsprung (3.2) und einem mit dem Vorsprung zusammenwirkenden Anschlagbereich (1.2) gebildet werden, wobei der Vorsprung fest am Betätigungselement oder fest am Ventilgehäuse und der Anschlagbereich am entsprechend anderen Teil vorgesehen ist. Zwischen Ausnehmung und Betätigungselement ist ferner ein Dichtungselement (5) vorgesehen, daß derart elastisch ausgebildet ist, daß das Betätigungselement bei der Montage außermittig in die Ausnehmung einführbar ist und sich im eingeführten Zustand selbsttätig in der Ausnehmung zentriert.

## Beschreibung

Die Erfindung betrifft ein Ventil mit einem in einem Ventilgehäuse angeordneten Ventilglied und einer Handbetätigungseinrichtung zur manuellen Betätigung des Ventilglieds.

Das Ventilglied wird üblicherweise bei derartigen Ventilen elektrisch bzw. elektromagnetisch betätigt. Die manuelle Betätigung des Ventilgliedes wird dann vornehmlich zur Überprüfung des Ventils oder bei Startvorgängen verwendet.

Aus der Praxis sind Ventile mit einem in einem Ventilgehäuse angeordneten Ventilglied und einer Handbetätigungseinrichtung bekannt, wobei die Handbetätigungseinrichtung ein in einer Ausnehmung des Ventilgehäuses beweglich angeordnetes Betätigungselement aufweist, das zur manuellen Betätigung des Ventilglieds mit diesem in Wirkverbindung steht und ferner Mittel zur Sicherung des Betätigungselements in der Ausnehmung des Ventilgehäuses vorgesehen sind, damit das Betätigungselement nicht durch den im Inneren des Ventils herrschenden Betriebsdruck herausgedrückt wird.

Die Mittel zur Sicherung des Betätigungselements in der Ausnehmung des Ventilgehäuses werden beispielsweise nach Art eines Bajonettverschlusses gebildet. Diese Methode ist jedoch relativ aufwendig in der Herstellung. Eine andere bekannte Lösung sieht die Verwendung eines Zylinderstifts vor, der nach Einführen des Betätigungselements quer zu diesem eingeführt werden muß. Diese Lösung ist zwar relativ einfach zu realisieren, erfordert jedoch für die Anbringung des Zylinderstifts zusätzlichen Bauraum, der zudem auch zugänglich sein muß.

Der Erfindung liegt daher die Aufgabe zugrunde, ein Ventil mit einer Handbetätigungseinrichtung gemäß dem Oberbegriff des Anspruches 1 anzugeben, wobei sich die Handbetätigungseinrichtung durch einen geringen Bauraum auszeichnet und dadurch insbesondere für sehr klein bauende Ventile geeignet ist.

Erfindungsgemäß wird diese Aufgabe durch die Merkmale des Anspruches 1 gelöst.

Weitere Ausgestaltungen der Erfindung sind Gegenstand der Unteransprüche.

Erfindungsgemäß weist das Ventil ein in einem Ventilgehäuse angeordnetes Ventilglied und eine Handbetätigungseinrichtung auf, wobei die Handbetätigungseinrichtung ein in einer Ausnehmung des Ventilgehäuses beweglich angeordnetes Betätigungselement aufweist, das zur manuellen Betätigung des Ventilglieds mit diesem in Wirkverbindung steht, und ferner Mittel zur Sicherung des Betätigungselements in der Ausnehmung des Ventilgehäuses vorgesehen sind. Die Sicherungsmittel werden durch einen starren Vorsprung und einen mit dem Vorsprung zusammenwirkenden Anschlagbereich gebildet, wobei der Vorsprung fest am Betätigungselement oder fest am Ventilgehäuses und der Anschlagbereich am entsprechend anderen Teil vorgesehen ist.

Ferner ist zwischen der Ausnehmung und dem Betätigungselement ein Dichtungselement vorgesehen, das derart verformbar ist, daß das Betätigungselement bei der Montage außermittig in die Ausnehmung einführbar ist und sich im eingeführten Zustand selbsttätig in der Ausnehmung zentriert.

In einer bevorzugten Ausführungsform ist die Ausnehmung im Ventilgehäuse als Bohrung und das Betätigungselement entsprechend stiftförmig ausgebildet, wobei der Vorsprung an der äußeren Umfangsfläche des Betätigungselements vorgesehen ist und der Durchmesser des Betätigungselements im Bereich des Vorsprungs gleich groß oder kleiner als der Durchmesser der Ausnehmung ist.

Weitere Ausgestaltungen und Vorteile werden anhand der Beschreibung eines Ausführungsbeispieles und der Zeichnung näher erläutert.

In der Zeichnung zeigen
- Fig.1: eine Schnittdarstellung des Ventils im Bereich der Betätigungseinrichtung während der Montage und
- Fig.2: eine Schnittdarstellung des Ventils im Bereich der Betätigungseinrichtung im montierten Zustand.

Das Ventil besteht im wesentlichen aus einem Ventilgehäuse 1 und einem im Ventilgehäuse angeordneten Ventilglied 2 sowie einer Handbetätigungseinrichtung 3.

Bei dem Ventil handelt es sich beispielsweise um ein Ein- bzw. Mehrwegeventil, wie es beispielsweise in der DE-A-197 18 408 offenbart ist. Das Ventilglied dient dabei zum Verschließen bzw. Freigeben einer oder mehrerer Ventilöffnungen.

Das Ventilglied wird dabei üblicherweise elektrisch oder elektromagnetisch betätigt. Im Rahmen der Erfindung ist es jedoch auch denkbar, daß der Ventilkörper lediglich mittels der Handbetätigungseinrichtung manuell betätigbar ist.

Die Handbetätigungseinrichtung 3 weist ein Betätigungselement 3.1 auf, das in einer Ausnehmung 1.1 beweglich angeordnet ist. Es steht zur manuellen Betätigung des Ventilglieds 2 mit diesem in Wirkverbindung, wobei zwischen dem Betätigungselement 3.1 und dem Ventilglied 2 entweder ein direkter Kontakt oder ein oder mehrere zwischengeschaltete Verbindungsmittel denkbar sind. Im dargestellten Ausführungsbeispiel wird die Wirkverbindung über einen Zylinderstift 4 angedeutet.

Ferner sind Mittel zur Sicherung des Betätigungselements 3.1 in der Ausnehmung 1.1 des Ventilgehäuses vorgesehen. Die Sicherungsmittel werden durch einen starren Vorsprung 3.2 und einen mit dem Vorsprung zusammenwirkenden Anschlagbereich 1.2 gebildet, wobei der Vorsprung fest am Betätigungselement oder fest am Ventilgehäuse und der Anschlagbereich am entsprechend anderen Teil vorgesehen sein kann. Im dargestellten Ausführungsbeispiel befindet sich der nasenartig ausgebildete Vorsprung 3.2 am Betätigungselement 3.1 und der Anschlagbereich 1.2 im Bereich einer Nut bzw. Aussparung der Ausnehmung 1.1. Der Vorsprung 3.2 erstreckt sich somit in Umfangsrichtung des Betätigungselements 3.1 lediglich über einen kleinen Teilabschnitt.

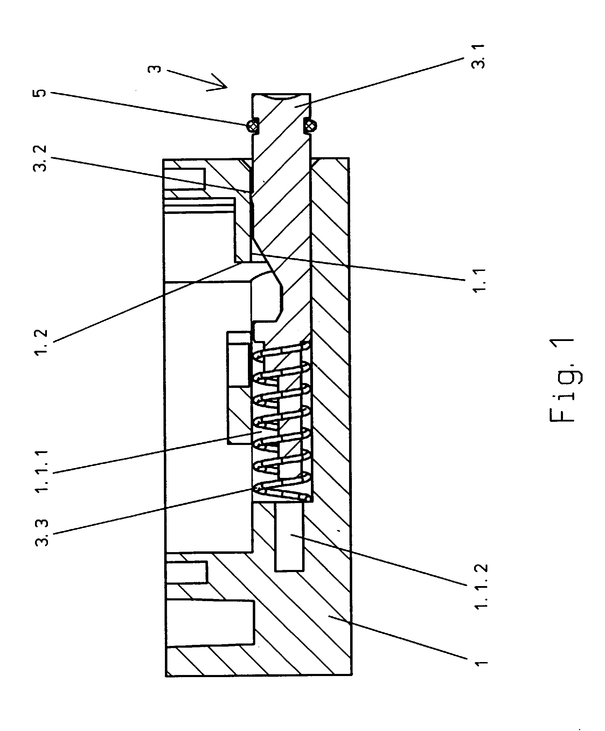

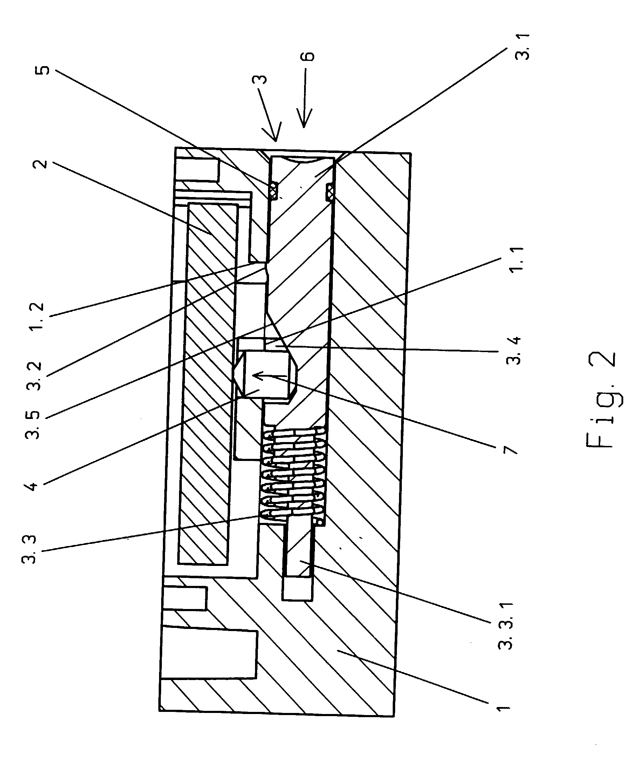

Zwischen der Ausnehmung 1.1 und dem Betätigungselement 3.1 ist ferner ein Dichtungselement 5 vorgesehen, das zweckmäßigerweise als O-Ring ausgebildet ist. Anstelle eines O-Rings könnte das Dichtungselement 5 auch durch eine andere elastische Abdichtung, z.B. eine lokale, auf dem Betätigungselement vulkanisierte Gummibeschichtung, ausgebildet werden. Das Dichtungselement 5 ist derart elastisch, daß das Betätigungselement 3.1 bei der Montage außermittig in die Aussparung 1.1 einführbar ist und sich im eingefuhrten Zustand selbsttätig in der Aussparung zentriert. Wie insbesondere aus den Fig.1 und 2 ersichtlich wird, ist die Ausnehmung 1.1 als Aufnahmebohrung und das Betätigungselement 3.1 entsprechend stiftförmig ausgebildet. Der Vorsprung 3.2 ist dabei an der äußeren Umfangsfläche des Betätigungselements 3.1 vorgesehen, wobei der Durchmesser des Betätigungselements 3.1 im Bereich des Vorsprungs 3.2 gleich groß oder kleiner als der Durchmesser der Aufnahmebohrung ist. Durch die nasenartige Ausbildung des Vorsprungs 3.2 und eine ggf. zusätzlich angefaste Aufnahmebohrung wird das Einführen des Betätigungselements bei der Montage erleichtert.

Im dargestellten Ausführungsbeispiel ist das Dichtungselement 5 in einer entsprechenden Umfangsnut des Betätigungselements 3.1 vorgesehen. Alternativ könnte das Dichtungselement 5 aber auch in einer entsprechenden Umfangsnut in der Ausnehmung 1.1 angeordnet werden. Das Dichtungselement 5.1 wird bei der Montage am dem Vorsprung 3.2 gegenüberliegenden Bereich des Betätigungselements 3.1 stärker komprimiert. Die Elastizität des Dichtungselements muß dabei so bemessen sein, daß einerseits durch die unterschiedliche Verformung über den Umfang des Dichtungselements ein Einführen des Betätigungselements 3.1 ermöglicht wird und sich andererseits das Betätigungselement 3.1 im montierten Zustand gemäß Fig.2 selbsttätig in der Aussparung 1.1 zentriert und sich dadurch konzentrisch in der Aufnahmebohrung ausrichtet.

Das Dichtungselement 5 dient somit nicht nur zur Abdichtung des im Ventilgehäuse herrschenden Systemdrucks gegenüber dem Umgebungsdruck, sondern hat auch die Funktion, das Einführen und anschließende Zentrieren des Betätigungselements zu gewährleisten.

Die Betätigungseinrichtung 3 sieht ferner ein Federelement 3.3 vor, das auf das Betätigungselement 3.1 derart einwirkt, daß bei Nichtbetätigung des Betätigungselements der Vorsprung 3.2 gegen den Anschlagbereich 1.2 gedrückt wird (siehe Fig.2).

Das Betätigungselement 3.1 weist an seinem einen Ende einen Endbereich 3.3.1 mit kleinerem Durchmesser auf, so daß das Federelement 3.3 in diesem Bereich auf das Betätigungselement 3.1 aufgeschoben werden kann. Das Betätigungselement 3.1 wird dann auch mit diesem Endbereich als erstes in die Ausnehmung 1.1 eingeschoben.

In einer zweckmäßigen Ausgestaltung der Erfindung weist die Ausnehmung 1.1 einen ersten Bereich 1.1.1 mit einem ersten Durchmesser und einen zweiten Bereich 1.1.2 mit einem zweiten, kleineren Durchmesser auf, wobei das Betätigungselement 3.1 mit seinem im Durchmesser kleineren Endbereich im zweiten Bereich 1.1.2 der Ausnehmung aufgenommen und abgestützt wird.

Wie insbesondere aus Fig.2 ersichtlich wird, stützt sich somit das Federelement 3.3 einerseits am Gehäuse und andererseits am Betätigungselement 3.1 ab. Die mit dem Anschlagbereich 1.2 in Kontakt kommende Nase 3.2 verhindert dabei, daß das Betätigungselement durch den Druck des vorgespannten Federelements 3.3 einerseits und durch den Druck des Systemdrucks andererseits aus der Ausnehmung 1.1 herausgedrückt wird.

Die manuelle Betätigung des Ventilglieds 2 kann entweder durch axiale Verschiebung des Betätigungselements 3.1 oder durch eine Drehbewegung desselben erfolgen. Im dargestellten Ausführungsbeispiel ist das Betätigungselement 3.1 axial, d.h. in Richtung des Pfeiles 6 betätigbar.

Die Wirkverbindung zwischen Betätigungselement 3.1 und Ventilglied 2 kann dabei je nach den örtlichen Gegebenheiten auf unterschiedlichste Art und Weise gelöst werden. So kann beispielsweise das Betätigungselement mit einem Ende direkt mit dem Ventilglied in Kontakt stehen, wobei die manuelle Betätigung des Ventilglieds durch Drücken oder Drehen des gegenüberliegenden Endes erfolgen könnte.

Im dargestellten Ausführungsbeispiel sieht das Betätigungselement 3.1 eine Aussparung 3.4 vor, die wiederum eine Schräge 3.5 aufweist. In diese Aussparung 3.4 ragt ein Zylinderstift 4, der direkt oder indirekt mit dem Ventilglied 2 in Wirkverbindung steht. Durch eine Betätigung des Betätigungselements 3.1 in Richtung des Pfeils 6 kommt die schräge 3.5 mit dem Zylinderstift 4 in Kontakt und verschiebt diesen in Richtung des Pfeiles 7.

Sobald der äußere Betätigungsdruck in Richtung des Pfeiles 6 auf das Betätigungselement 3.1 beendet wird, verschiebt sich das Betätigungselement 3.1 durch die Feder 3.3 wieder in entgegengesetzter Richtung, bis der Vorsprung 3.2 mit dem Anschlagbereich 1.2 in Kontakt kommt. Dies wiederum hat zur Folge, daß der Zylinderstift 4 wieder in die Aussparung 3.4 verschoben wird.

Die oben beschriebene Handbetätigungseinrichtung benötigt einen besonders geringen Bauraum, der im wesentlichen der Aufnahmebohrung für das Betätigungselement 3.1 entspricht. Die Handbetätigungseinrichtung ist daher insbesondere für sehr klein bauende Ventile interessant.

Das Betätigungselement selbst wird zweckmäßigerweise aus Kunststoff hergestellt und könnte mit einem Durchmesser von weniger als 2 mm hergestellt werden. Auch läßt sich der nasenartige Vorsprung 3.2 im Kunststoff-Spritzgußverfahren besonders leicht erzeugen. Bei der Montage der Betätigungseinrichtung muß das Betätigungselement lediglich in die Ausnehmung 1.1 eingeschoben werden. Eine zusätzliche Sicherung ist durch das selbsttätige Zentrieren des Betätigungselements durch das Dichtungselement nicht mehr erforderlich.

## Patentansprüche

1. Ventil mit einem in einem Ventilgehäuse (1) angeordneten Ventilglied (2) und einer Handbetätigungseinrichtung (3), die ein in einer Ausnehmung (1.1) des Ventilgehäuses beweglich angeordnetes Betätigungselement (3.1) aufweist, das zur manuellen Betätigung des Ventilglieds (2) mit diesem in Wirkverbindung steht, und ferner Mittel zur Sicherung des Betätigungselements in der Ausnehmung (1.1) des Ventilgehäuses vorgesehen sind,
dadurch gekennzeichnet, daß
- die Sicherungsmittel durch einen starren Vorsprung (3.2) und einen mit dem Vorsprung zusammenwirkenden Anschlagbereich (1.2) gebildet werden, wobei der Vorsprung fest am Betätigungselement (3.1) oder fest am Ventilgehäuse (1) und der Anschlagbereich (1.2) am entsprechend anderen Teil vorgesehen ist und
- daß zwischen Ausnehmung (1.1) und Betätigungselement (3.1) ein Dichtungselement (5) vorgesehen ist, das derart elastisch ausgebildet ist, daß das Betätigungselement (3.1) bei der Montage außermittig in die Ausnehmung (1.1) einführbar ist und sich im eingeführten Zustand selbsttätig in der Ausnehmung (1.1) zentriert.

2. Ventil nach Anspruch 1, dadurch gekennzeichnet, daß der starre Vorsprung (3.2) nasenartig ausgebildet ist.

3. Ventil nach Anspruch 1, dadurch gekennzeichnet, daß der starre Vorsprung (3.2) am Betätigungselement (3.1) vorgesehen ist.

4. Ventil nach Anspruch 1, dadurch gekennzeichnet, daß die Ausnehmung (1.1) als Aufnahmebohrung und das Betätigungselement (3.1) stiftförmig ausgebildet ist, wobei der Vorsprung (3.2) an der äußeren Umfangsfläche des Betätigungselements (3.1) vorgesehen ist und der Durchmesser des Betätigungselements im Bereich des Vorsprungs gleich groß oder kleiner als der Durchmesser der Aufnahmebohrung ist.

5. Ventil nach Anspruch 1, dadurch gekennzeichnet, daß der Anschlagbereich (1.2) in einer Aussparung der Ausnehmung (1.1) bzw. in einer Aussparung des Betätigungselements (3.1) ausgebildet ist.

6. Ventil nach Anspruch 1, dadurch gekennzeichnet, daß in der Ausnehmung (1.1) ferner ein Federelement vorgesehen ist, das auf das Betätigungselement (3.1) derart einwirkt, daß bei Nichtbetätigung des Betätigungselements der Vorsprung (3.2) gegen den Anschlagbereich (1.2) gedrückt wird.

7. Ventil nach Anspruch 1, dadurch gekennzeichnet, daß das Betätigungselement (3.1) Mittel (3.4, 3.5) zur Übertragung der Bewegung des Betätigungselements auf das Ventilglied (2) aufweist.

8. Ventil nach Anspruch 1, dadurch gekennzeichnet, daß das Betätigungselement (3.1) Mittel (3.4, 3.5) zur Übertragung der Bewegung des Betätigungselements auf das Ventilglied (2) aufweist, wobei diese Mittel eine Schräge (3.5) am Betätigungselement aufweisen.

9. Ventil nach Anspruch 1, dadurch gekennzeichnet, daß das Betätigungselement (3.1) zur manuellen Betätigung des Ventilglieds (2) axial beweglich angeordnet ist.

10. Ventil nach Anspruch 1, dadurch gekennzeichnet, daß das Betätigungselement (3.1) zur manuellen Betätigung des Ventilglieds (2) drehbeweglich angeordnet ist.

11. Ventil nach Anspruch 1, dadurch gekennzeichnet, daß das Betätigungselement (3.1) von außen gegen den Druck eines Federelements (3.3) axial verschiebbar angeordnet ist.

12. Ventil nach Anspruch 1, dadurch gekennzeichnet, daß das Betätigungselement (3.1) stiftförmig ausgebildet ist, das an seinem einen Ende von außen betätigbar ist und an seinem anderen Ende einen Endbereich mit kleinerem Durchmesser aufweist, auf den ein Federelement (3.3) aufgeschoben ist.

13. Ventil nach Anspruch 1, dadurch gekennzeichnet, daß das Betätigungselement (3.1) stiftförmig ausgebildet ist, das an seinem einen Ende von außen betätigbar ist und an seinem anderen Ende einen Endbereich mit kleinerem Durchmesser aufweist, auf den ein Federelement (3.3) aufgeschoben ist und ferner die Ausnehmung (1.1) als Aufnahmebohrung ausgebildet ist, wobei die Aufnahmebohrung einen ersten Bereich mit einem ersten Durchmesser und einen zweiten Bereich mit einem zweiten, kleineren Durchmesser aufweist, und wobei das Betätigungselement (3.1) mit seinem im Durchmesser kleineren Endbereich im zweiten Bereich der Aufnahmebohrung aufgenommen und abgestützt ist.

14. Ventil nach Anspruch 1, dadurch gekennzeichnet, daß ein als O-Ring ausgebildetes Dichtungselement (5) vorgesehen ist.
